# EUROPÄISCHE PATENTSCHRIFT

(11) **EP 3 154 774 B1**
(45) Veröffentlichungstag und Bekanntmachung des Hinweises auf die Patenterteilung: **09.12.2020**
(21) Anmeldenummer: 15727011.7
(22) Anmeldetag: 10.06.2015
(51) Int. Cl.: B30B 9/12, B30B 9/26

(54) **SCHNECKENPRESSE ZUM VERDICHTEN UND ENTWÄSSERN EINER SUSPENSION SOWIE WARTUNGSVERFAHREN EINER SOLCHEN SCHNECKENPRESSE**
SCREW PRESS FOR COMPRESSING AND DEWATERING A SUSPENSION AND MAINTENANCE METHOD FOR SUCH A SCREW PRESS
PRESSE À VIS SANS FIN POUR COMPRIMER ET DÉSHYDRATER UNE SUSPENSION ET PROCÉDÉ DE MAINTENANCE D'UNE TELLE PRESSE

(30) Priorität: 11.06.2014 CH 881142014
(43) Veröffentlichungstag der Anmeldung: 19.04.2017
(73) Patentinhaber: Hitachi Zosen Inova AG, 8005 Zürich (CH)
(72) Erfinder: OERTIG, Michael, 8500 Frauenfeld (CH); GSPONER, Patrik Daniel, 9242 Oberuzwil (CH); SCHMIDT, Daniel, 9242 Oberuzwil (CH)
(74) Vertreter: Schaad, Balass, Menzl & Partner AG
(86) Internationale Anmeldenummer: PCT/EP2015/062937
(87) Internationale Veröffentlichungsnummer: WO 2015/189271

(56) Entgegenhaltungen:
- WO-A1-2006/111110
- WO-A1-2013/030638
- US-A- 1 709 349
- US-A- 4 279 197
- US-A- 4 397 230

## Beschreibung

### Technisches Gebiet:

Die vorliegende Erfindung beschreibt eine Schneckenpresse, einsetzbar als Entwässerungsvorrichtung zum Verdichten und Entwässern einer Suspension, gemäß Anspruch 1, sowie ein Wartungsverfahren : gemäß Anspruch 8, zum Wechsel von Siebkorbeinsätzen aus Siebkörben in einer Pressenkammer einer Schneckenpresse, welche als Teil einer Entwässerungsvorrichtung zum Entwässerung von Suspensionen verwendet wird.

### Stand der Technik:

Bei der Herstellung von Biogas in Fermentern oder Vergärungsanlagen bildet sich eine Suspension, genauer eine Gärrestesuspension, welche zur Verbesserung der Biogasausbeute, der Verkürzung des Nachrotteprozesses und zur Verringerung der Geruchsemission entwässert werden sollte. Aufgrund der typischen Konsistenz der Gärrestsuspension, welche zu etwa 2/3 aus Flüssigkeit und zu 1/3 aus Trockensubstanz besteht, werden üblicherweise Entwässerungsvorrichtungen mit einer Schneckenpresse verwendet. Aus dem Fermenter wird die Gärrestsuspension in die Schneckenpresse überführt und dort mechanisch aufgeschlossen und entwässert.

Wie in der DE 199 44 110 A1 beschrieben, umfasst die Schneckenpresse einer Entwässerungsvorrichtung eine Pressenkammer, in welcher ein Siebmantel gelagert ist, welcher eine Schneckenwelle umgibt. Nach Einfüllen der Gärrestsuspension durch eine Presseneingabe in die Pressenkammer wird das Prinzip der Querstromfiltration innerhalb der Schneckenpresse ausgenutzt, wobei eine innerhalb des druckfesten, flüssigkeitsdurchlässigen Siebmantels rotierende Schneckenwelle die Gärrestsuspension in Richtung der Schneckenwellenachse mitführt, wobei durch den aufgebauten Druck innerhalb des Siebmantels ein flüssiges bzw. pastöses Filtrat durch die Lochungen des Siebmantels herausgepresst wird. Durch die Reibung des Feststoffs der Gärrestsuspension am Siebmantel und der Schneckenwelle ist eine Drosselung des Stoffaustrittes erreichbar, so dass ein Gegendruck aufgebaut wird, welcher das Filtrat oder Presswasser durch die Öffnungen im Siebmantel befördert. Feststoffe des so entwässerten Gärrestes werden vom Siebmantel, welcher üblicherweise aus Siebkörben gestaltet ist, zurückgehalten und schlussendlich zu einer Pressgutausgabe befördert und dort aus dem Siebmantel bzw. der Schneckenpresse heraus befördert.

Derartige Schneckenpressen werden üblicherweise mit geringen Drehzahlen von wenigen Umdrehungen pro Minute gefahren, wobei bei einem kontinuierlichen dauerhaften Betrieb geringe Betriebs- und Instandhaltungskosten anfallen, während weiterverwendbarer entwässerter Gärrest und Filtrat kontinuierlich aus der Pressgutausgabe bzw. einem Filtratauslass anfallen.

Damit derartige Schneckenpressen störungsfrei funktionieren, muss der Aufbau an die zu erwartende Gärrestsuspension angepasst werden. Es muss ein passender Siebmantel mit geeigneter Grösse der Öffnungen ausgebildet werden, die Schneckenwelle in geeigneter Drehgeschwindigkeit betrieben werden und das Spaltmass zwischen Innenfläche der Siebkörbe und Umfang der Schneckenwelle muss geeignet gewählt sein.

Im Dauerbetrieb einer Schneckenpresse zur Entwässerung von Gärrestsuspensionen hat sich gezeigt, dass der Siebmantel bzw. die Siebe im laufenden Betrieb automatisch freigelegt werden, indem Feststoffe an den Siebflächen vorbeigeführt werden. Die Siebe verschleissen aber relativ schnell und müssen gewechselt werden. Gemäss Stand der Technik ist die Auswechslung von Siebeinlagen des Siebmantels mit einem grossen technischen Aufwand verbunden. Die Siebkörbe werden dazu vollständig ausgebaut, neue Siebeinlagen eingebracht und die Siebkörbe wieder eingebaut.

Während die Presseigenschaften und der Durchsatz der verwendeten Schneckenpressen für die Entwässerung von Gärrestsuspensionen optimiert wurden, ist die Wartung derartiger Schneckenpressen immer noch problematisch.

Aus der EP 2 561 981 A2 geht eine Entwässerungsvorrichtung mit einer Schneckenpresse hervor, welche eine Pressenkammer mit einem Siebmantel, umfassend mehrere als Siebkorbhalbschalen gebildete Siebkörbe, aufweist. Die Pressenkammer wird von einer Pressenhaltevorrichtung getragen, welche auf einer Stützvorrichtung auf dem Boden steht. Die Siebkörbe umgeben im Betriebszustand die Schneckenwelle vollumfänglich, wodurch ein Filtrierraum gebildet wird. Die Siebkörbe sind an zwei horizontal liegenden Holmen als Siebmantelhaltevorrichtung parallel zur Schneckenwellenachse verlaufend befestigt. Zumindest die oberen Siebkörbe sind von den Holmen demontierbar ausgeführt, sodass bei entfernten, oberen Siebkörben der Filtrierraum und die Schneckenwelle zugänglich werden. Nach Demontage der oberen Hälfte der Siebkörbe können die Siebkörbe auf dem Boden abgestellt werden, und verschlissene Siebeinlagen können ausgewechselt werden. Dazu werden neue Siebeinlagen in die Siebkorbhalbschalen eingelegt und befestigt. Die in der Pressenkammer verbliebenen Hälften der Siebkörbe können mit neuen Siebeinlagen versehen werden, wenn die Schneckenwelle aus der Pressenkammer entfernt ist. Nur wenn die unteren Siebkorbhalbschalen freigelegt sind, können auch die zugehörigen Siebeinlagen gewechselt werden. Gemäss der EP 2 561 981 A2 können einzelne verschlissene Siebeinlagen zwar ausgetauscht werden, die Wartung ist aber mit einem hohen technischen Aufwand verbunden. Die Demontage des Siebmantels ist bislang aufwändig, da die Schneckenwelle entfernt werden muss, damit alle Siebkörbe zugänglich gemacht werden können.

Die Wartungsmöglichkeit bzw. die Flexibilität der Wartung ist bei solchen bekannten Schneckenpressen sehr beschränkt. Da die Zugänglichkeit des Siebmantels erschwert ist, muss eine aufwändige Demontage vieler Bauteile erfolgen, um verschlissene Siebeinlagen zu wechseln. Oftmals muss der Hersteller die periodische Wartung durch einen Mitarbeiter durchführen, um beispielsweise den ordnungsgemässen Wiedereinbau der Schneckenwelle zu gewährleisten.

In US 4,397,230 und US 4,279,197 sind demgegenüber Schneckenpressen offenbart, bei welchen die Siebkorbhalbschalen über ein Scharnier schwenkbar gelagert sind. Dies ermöglicht eine einfachere und schnellere Wartung der Schneckenpresse und erleichtert insbesondere den Austausch von Siebeinlagen. US 4,279,197 offenbart eine Schneckenpresse gemäß dem Oberbegriff des Anspruchs 1.

Darstellung der Erfindung:
Die vorliegende Erfindung hat sich zur Aufgabe gestellt, eine Entwässerungsvorrichtung mit einer Schneckenpresse bzw. eine Schneckenpresse mit einem Siebmantel zu schaffen, welche nicht nur eine einfache und schnelle Wartung der Schneckenpresse erlaubt, sondern gleichzeitig auch einen möglichst geringen und gleichmässigen Verschleiss aufweist.

Notwendige periodische Wartungen der Schneckenpresse werden erleichtert, da nur wenige Handgriffe notwendig sind, womit der Zeitaufwand für die Wartung enorm verkürzt wird. Die Wartung muss nicht zwingend durch einen geschulten Wartungsmonteur des Herstellers durchgeführt werden, wodurch eine flexible und kostengünstige Wartung ermöglicht wird.

Besonderer Wert wurde bei der Entwicklung auf einen unkomplizierten Wechsel von Verschleissteilen wie Siebeinlagen gelegt, sodass je nach Wunsch geeignete Siebeinlagen flexibel und schnell ersetzt bzw. angeordnet werden können.

Daneben wurde durch die zusätzliche Befestigung der Siebkorbhalbschalen an einer Lasche der Siebmantelhaltevorrichtung auch die Stabilität der Konstruktion verbessert und insbesondere auch ein sehr konzentrischer Lauf erreicht. Dies hat zur Folge, dass weniger Kräfte auf das Schneckengetriebe und die Siebkorbeinsätze wirken, was zu einer geringeren Abnutzung und damit einer grösseren Lebensdauer führt.

Zudem findet bei der erfindungsgemässen Schneckenpresse der Verschleiss konzentrisch und gleichmässig statt, so dass alle Teile ungefähr gleich stark abgenutzt und daher ungefähr zur gleichen Zeit ersetzt oder gewartet werden müssen. Dies führt zu einem selteneren Wartungsbedarf und damit insgesamt zu einem geringeren Aufwand und kürzeren Stillstandzeiten. Auch werden dadurch die sonst üblichen Verschleissschalen unnötig.

Die obigen Effekte sind insbesondere bei längeren Schneckenpressen, wo oft mehrere Siebkörbe hintereinander angeordnet sind, von grossem Vorteil. Bei kurzen Schneckenpressen, wie sie beispielsweise in US 4,397,230 oder US 4,279,197 offenbart sind, ist diese von geringerer Wichtigkeit.

Kurze Beschreibung der Zeichnungen:
Ein bevorzugtes Ausführungsbeispiel des Erfindungsgegenstandes wird nachstehend im Zusammenhang mit den anliegenden Zeichnungen beschrieben.
- Figur 1a: zeigt eine perspektivische Ansicht einer Entwässerungsvorrichtung für eine Biogasanlage mit einer Schneckenpresse, während
- Figur 1b: eine Seitenansicht der Schneckenpresse aus Figur 1a zeigt, wobei eine Abdeckhaube teilweise entfernt ist und damit ein Einblick auf einen Siebmantel ermöglicht ist.
- Figur 2: zeigt eine Schnittansicht entlang der Linie A-A aus Figur 1b mit angedeuteter vollständiger Pressenkammer und Abflusswanne mit geschlossenem Siebmantel, während
- Figur 3: einen einseitig geöffneten Siebmantel mit aufgeschwenkter erster Siebkorbhalbschale in einer Schnittansicht und
- Figur 4: einen vollständig geöffneten Siebmantel mit beidseitig aufgeschwenkter erster und zweiter Siebkorbhalbschale in einer Schnittansicht zeigt, wobei ein Teil einer Siebmantelhaltevorrichtung und die Schneckenwelle weggelassen wurden.

### Beschreibung:

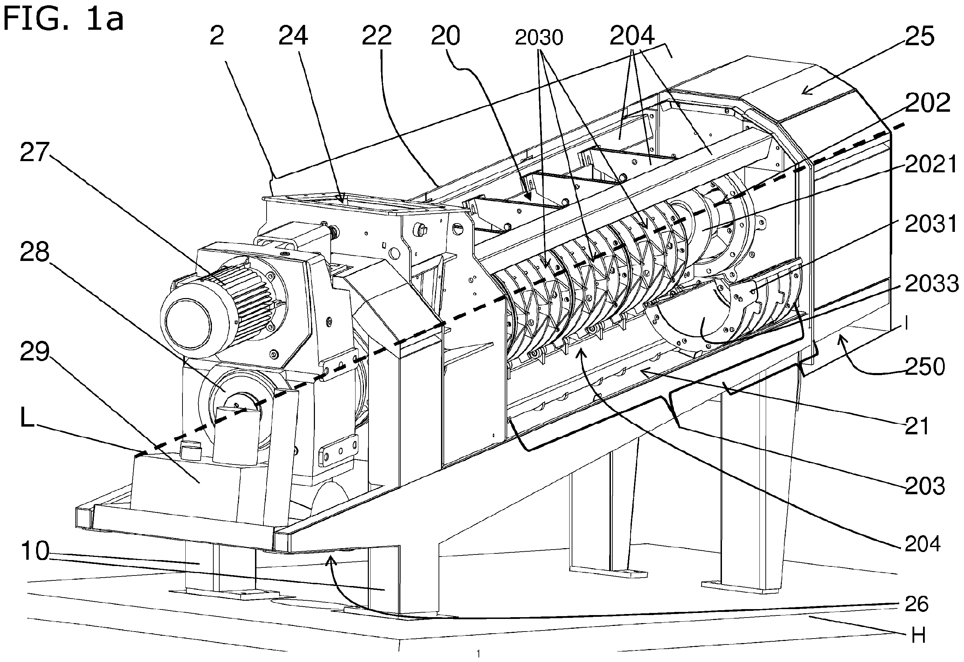

Eine Entwässerungsvorrichtung zur Integration in einer Vergärungsanlage oder Biogasanlage oder als Teil davon ist in Figur 1a perspektivisch dargestellt. Die Entwässerungsvorrichtung ist als Schneckenpresse 2 ausgeführt. Die Schneckenpresse 2 entspricht einem möglichen Aufbau, um eine Gärrestsuspension, welche in einer Nass- oder Trockenvergärungsanlage anfällt, zu entwässern. Derartige Gärrestsuspensionen bestehen zu etwa 2/3 aus Flüssigkeit und zu 1/3 aus Trockensubstanz. Durch eine Entwässerung kann zum einen das aus der Flüssigkeit gebildete Filtrat oder Presswasser und zum anderen die entwässerten Gärreste in Form eines Presskuchens optimiert weiterverwendet werden. Die Entwässerungsvorrichtung ist auf Pressenstützen 10 gegen die Horizontale H gewinkelt verlaufend gelagert.

Die Schneckenpresse 2 weist eine Pressenkammer 20 auf, in welcher eine Schneckenwelle 202 die Pressenkammer 20 querend angeordnet ist. Die Schneckenwelle 202 verläuft entlang einer Schneckenwellenachse L und weist eine Schneckenwellenwendel 2021 auf. Die Schneckenwelle 202 ist durch zwei hier nicht dargestellte Wellenlager gehalten. Die Schneckenwelle 202 verläuft von einem Einfüllbereich, in welchem eine Pressguteingabe 24 angeordnet ist, bis zu einem Ausgabebereich, in welchem ein Presskopf 25 mit einer Pressgutausgabe 250 angeordnet ist.

Die Pressenkammer 20 ist von einer Abdeckhaube 22 abdeckbar gestaltet. In Figur 1a ist eine mehrteilige abnehmbare Abdeckhaube 22 dargestellt, wobei nur der abgewandte Teil der Abdeckhaube 22 die Pressenkammer 20 teilweise abdeckend belassen wurde, damit ein Einblick in die Pressenkammer 20 möglich ist. Die Abdeckhaube 22 ist hier dreiteilig ausgeführt. Der dem Boden zugewandte Teil der Pressenkammer 20 ist als durchgehende Abflusswanne 21 ausgestaltet, sodass ausgepresstes Filtrat in die Abflusswanne 21 gelangen kann und aufgrund der Schwerkraft zu einem in Figur 1a angedeuteten Filtratauslass 26 fliessen kann.

Die Schneckenwelle 202 wird von einem Motor 27, einem Aufsteckgetriebe 28 und einem Hydraulikaggregat 29, von einer nicht dargestellten Steuerung gesteuert, angetrieben. Je nach Konsistenz der Gärrestsuspension und der zu erreichenden Entwässerung werden die Drehzahl der Schneckenwelle 202 und die wirkenden Drehmomente durch die Steuerung justiert. Die Schneckenwelle 202 wird dabei in der Regel mit höchstens einigen wenigen Umdrehungen pro Minute gefahren.

In der Pressenkammer 20 umgibt ein Siebmantel 203 die Schneckenwelle 202 konzentrisch. Der Siebmantel 203 umfasst mehrere, in Richtung der Schneckenwellenachse L hintereinander angeordnete, mehrteilige Siebkörbe 2030, welche ein Stützgerüst für in die Siebkörbe 2030 einlegbare Siebkorbeinsätze 2033 bilden. Die Siebkörbe 2030 sind hier aus jeweils zwei Siebkorbhalbschalen 2031 gebildet, wobei eine erste Siebkorbhalbschale 2031 geöffnet dargestellt ist und entsprechend der Siebkorbeinsatz 2033 erkennbar ist. Die Siebkörbe 2030 bzw. die Siebkorbhalbschalen 2031 weisen jeweils eine Korblänge 1 in Richtung der Schneckenwelle 202 verlaufend auf. In der in Figur 1a abgebildeten Ausführungsform sind fünf Siebkörbe 2030 vorhanden.

Der Siebmantel 203 umschliesst die Schneckenwellenwendel 2021 mit einem geringen Spaltmass vollständig, sodass ein notwendiger Druck auf die Gärrestsuspension innerhalb des Siebmantels 203 durch die Schneckenwelle 202 aufbringbar und eine Entwässerung der Gärrestsuspension in der Praxis möglich ist. Die Siebkorbeinsätze 2033 sind dünne Metallbleche mit durchgehenden gleichförmig verteilten Sieblöchern mit konstanten Durchmessern von 2 Millimetern bis zu etwa 6 Millimetern. Durch das geringe Spaltmass und den damit geringen Abstand zwischen den Siebkorbeinsätzen 2033 und der Schneckenwelle 202 werden die Siebkorbeinsätze 2033 während des Betriebes durch nachfliessende Gärrestsuspension gesäubert.

Es ist eine mehrteilige spezielle Siebmantelhaltevorrichtung 204 innerhalb der Pressenkammer 20 verlaufend vorgesehen, an welcher die Siebkörbe 2030 bzw. der Siebmantel 203 befestigt sind.

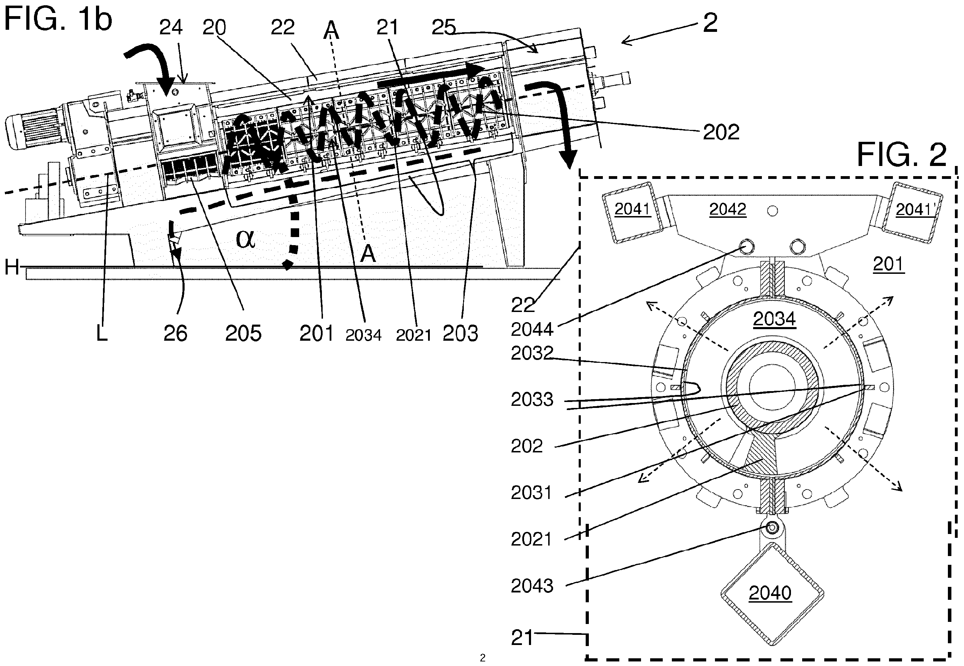

In Figur 1b ist durch Pfeile dargestellt, wie die Gärrestsuspension durch die Schneckenpresse 2 durchgeführt wird. In einem ersten Schritt wird die Gärrestsuspension durch die Pressguteingabe 24 in die Schneckenpresse 2 eingebracht. Die Gärrestsuspension stammt beispielsweise aus einem Fermenter einer Biogasanlage und weist einen überwiegenden Anteil einer Flüssigkeit auf, welche mit festen Gärresten gemischt ist.

Auf die Pressguteingabe 24 folgend ist ein Vorentwässerungssieb 205 angeordnet, durch welches Presswasser direkt nach dem Einfüllen entweichen kann. Die Gärrestsuspension wird daraufhin mittels Schneckenwelle 202 durch die Pressenkammer 20 befördert. Durch die angetriebene Schneckenwelle 202 bzw. die Schneckenwellenwendel 2021 wird die Gärrestsuspension in Pfeilrichtung parallel zur Schneckenwellenachse L durch einen Siebmantelinnenraum 2034, der zwischen Schneckenwellenwendel 2021 und der Innenfläche des Siebmantels 203 liegt, befördert. Durch die Siebkorbeinsätze 2033 des Siebmantels 203 kann flüssiges Filtrat aus der Gärrestsuspension quer zur Schneckenwellenachse L gepresst werden, welches in einen Filtratraum 201, der zwischen Siebmantel 203 und Abdeckhaube 22 bzw. Abflusswanne 21 liegt, entlassen wird. Das Filtrat oder Presswasser entweicht in radialer Richtung aus dem Siebmantel 203, während der entwässerte Gärrest als Presskuchen weiter in Richtung des durchgezogenen Pfeils in Richtung Presskopf 25 transportiert wird.

Da die Schneckenpresse 2 in einem Winkel α > 0°, bevorzugt etwa 30°, zur Horizontalen H ausgerichtet angeordnet ist, fliesst Presswasser automatisch in Richtung des Filtratauslasses 26, wie der gestrichelte Pfeil andeutet. Es müssen keine weiteren technischen Vorkehrungen für die Beförderung des Presswassers aus der Pressenkammer 20 getroffen werden.

Um den Presskuchen auch beim Ausstossen noch zu entwässern, ist hier der Presskopf 25 konusförmig ausgestaltet, sodass erst eine Verjüngung gequert werden muss, bevor der Presskuchen aus der Pressgutausgabe 250 ausgestossen wird. Die Verdichtung, Entwässerung und der Ausstoss werden durch die Schneckenwendel 202 ermöglicht.

In der Schnittansicht gemäss Figur 2 ist die mehrteilige Siebmantelhaltevorrichtung 204 erkennbar, welche im Filtratraum 201 der Pressenkammer 20 verläuft. Die mehrteilige Abdeckhaube 22 sowie die Abflusswanne 21 sind schematisch gestrichelt dargestellt. Die Schnittansicht stellt einen Querschnitt durch die Schneckenpresse 2 dar, wobei die Blickrichtung in Richtung der Schneckenwelle 202 bzw. der Schneckenwellenachse L verläuft. Im Betrieb wird Presswasser in Richtung der gestrichelten Pfeile radial von der Schneckenwelle 202 weg gepresst.

Die Siebmantelhaltevorrichtung 204 umfasst einen Holm 2040 und zwei Korbaufhängungsholme 2041, 2041', welche parallel zu Schneckenwellenachse L verlaufend angeordnet sind. Diese Holme sind alle ausserhalb des Siebmantels angeordnet. In der abgebildeten Ausführungsform ist der Holm 2014 vertikal unterhalb der Schneckenwelle 202 angeordnet, während die beiden Korbaufhängungsholme 2041, 2041' oberhalb der Schneckenwelle und leicht seitlich verlaufen. Zwischen den beiden Korbaufhängungsholmen 2041, 2041' sind Laschen 2042 quer zur Schneckenwelle 202, d.h. senkrecht zur Schneckenwellenachse L, orientiert angeordnet. An dieser Siebmantelhaltevorrichtung 204 sind die Siebkörbe 2030 entlang der Schneckenwelle 202 verlaufend befestigt.

Die erste Siebkorbhalbschale 2031 ist als Stützvorrichtung mit einem Siebkorbeinsatz 2033 versehen und umgibt die Schneckenwelle 202 konzentrisch beabstandet auf einer Seite der Schneckenwelle 202. Eine zweite Siebkorbhalbschale 2032 ist mit einem Siebkorbeinsatz 2033 versehen und umgibt die Schneckenwelle 202 konzentrisch auf der gegenüberliegenden Seite der Schneckenwelle 202. Die beiden Siebkorbhalbschalen 2032, 2033 bilden einen zylindrischen Siebkorb 2030 mit einem Siebmantelinnenraum 2034. Die Schneckenwelle 202 quert diesen Siebmantelinnenraum 2034, wobei die Schneckenwellenwendel 2021 minimal von den Siebkorbeinsätzen 2033 entfernt befestigt ist.

Die erste Siebkorbhalbschale 2031 und die zweite Siebkorbhalbschale 2032 sind schwenkbewegbar zueinander befestigt. Die Schwenkbewegbarkeit wird durch Anordnung mindestens eines Schwenkscharniers 2043 zwischen erster und zweiter Siebkorbhalbschale 2031, 2032 erreicht. Das Schwenkscharnier 2043 ist am zentrischen Holm 2040 angeordnet und jeweils fest mit beiden Siebkorbhalbschalen 2031, 2032 verbunden. Damit der Siebkorb 2030 geschlossen ist, sind Korbschliessmittel 2044 vorgesehen, welche die erste und die zweite Siebkorbhalbschale 2031, 2032 an der Lasche 2042 zusammenhalten.

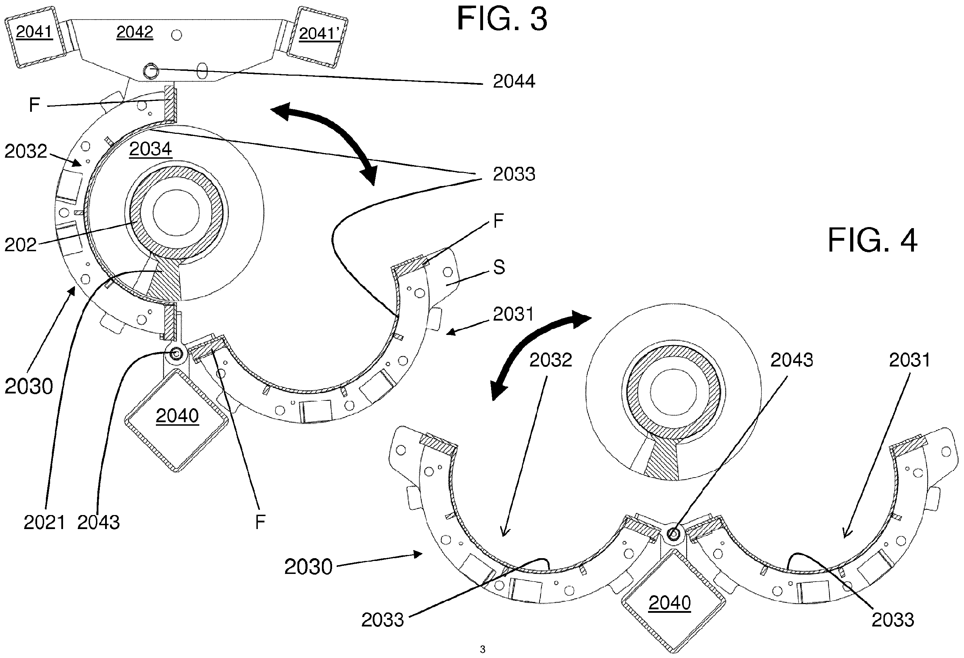

Figur 3 zeigt einen teilweise geöffneten Siebkorb 2030. Die erste Siebkorbhalbschale 2031 ist von der Schneckenwelle 202 mittels Schwenkscharnier 2043 weggeschwenkt. Im geöffneten Zustand des Siebkorbes 2030 ist der Siebkorbeinsatz 2033 der ersten Siebkorbhalbschale 2031 einfach zugänglich und kann leicht ausgewechselt werden.

Beide Siebkorbhalbschalen 2031, 2032 sind mit Flanschen F versehen, welche entlang der Korblänge 1 der halbzylindrischen Siebkorbhalbschalen 2031, 2032 verlaufen. Um die Abdichtung zwischen den Siebkorbhalbschalen 2031, 2032 zu optimieren, sind die Siebkorbeinsätze 2033 auch jeweils um die Flansche F geführt.

Eine Flanschseite jeder Siebkorbhalbschale 2031, 2032 bzw. der Flansch F selbst ist mit dem mindestens einen Schwenkscharnier 2043 verbunden. Durch die Verbindung der Flansche F mit dem Schwenkscharnier 2043 werden die Siebkorbhalbschalen 2031, 2032 bei Verschwenkung von der Schneckenwelle 202 beabstandet weggeschwenkt, sodass kein unerwünschter Kontakt mit der Schneckenwelle 202 auftreten kann. In einer bevorzugten Ausführungsform sind zwei Schwenkscharnieren 2043 pro Siebkorb 2030 verbunden und entsprechend zwei Schwenkscharniere 2043 an jedem Flansch F angeordnet.

Auf der dem Schwenkscharnier 2043 abgewandten Seite der Siebkorbhalbschale 2031, 2032 ist jeweils eine Korblasche S angeordnet. Die Korblasche S weist ein Durchgangsloch auf. Im geschlossenen Zustand der beiden Siebkorbhalbschalen 2031, 2032 wird die Korblasche S jeder Siebkorbhalbschale 2031, 2032 mit den Korbschliessmitteln 2044 an der Lasche 2042 der Siebmantelhaltevorrichtung 204 befestigt. Dadurch wird sichergestellt, dass Siebmantel 203 und Schneckenwelle 202 auch im Betrieb konzentrisch angeordnet bleiben. Im geschlossenen Zustand des Siebkorbes 2030 sind beide halbzylindrischen Siebkorbhalbschalen 2031, 2032 entlang der Korblänge 1 im Bereich des mindestens einen Schwenkscharniers 2043 und im Bereich der Lasche 2042 vollständig geschlossen.

Als Korbschliessmittel 2044 können Schrauben und Muttern verwendet werden, mit welchen die Korblasche S an der Lasche 2042 befestigbar ist. Dann sind ebenfalls Durchgangslöcher in der Lasche 2042 angeordnet. Die Schrauben und Muttern können zur Befestigung die Korblasche S und die Lasche 2042 querend fest geschraubt werden. Als Korbschliessmittel 2044 können auch andere Mittel eingesetzt werden, die eine lösbare Verbindung erlauben.

In Figur 4 ist auch die zweite Siebkorbhalbschale 2032 mittels Anordnung am Schwenkscharnier 2043 verschwenkt, wodurch eine maximale Öffnung des Siebkorbes 2030 einfach erreichbar ist. Die Siebkorbeinsätze 2033 beider Siebkorbhalbschalen 2032 können problemlos ausgetauscht werden. Dieser Austausch kann an der Schneckenwelle 202 vorbei durchgeführt werden. Die Siebkorbeinsätze 2033 in Form von Lochblechen sind durch vorgängige Verbiegung an die halbzylindrische Form der angepasst Siebkorbhalbschalen 2032 angepasst und werden in die Siebkorbhalbschalen 2031, 2032 eingelegt und dort fixiert.

Eine Wartung der Schneckenpresse 2, wobei Siebkorbeinsätze 2033 gewechselt werden, erfolgt gemäss dem folgenden Wartungsverfahren. Zuerst wird die Schneckenpresse 2 möglichst vollständig entleert, indem keine weitere Gärrestsuspension zugeführt wird und die vorhandene Gärrestsuspension mittels Schneckenwelle 202 verdichtet, entwässert und ausgebracht wird.

Danach wird die Pressenkammer 20 geöffnet, indem die Abdeckhaube 22 mindestens teilweise entfernt wird, wodurch ein Zugang zum Filtratraum 201 erreicht wird. Durch Lösen bzw. Entfernen der Korbschliessmittel 2044 an den Laschen 2042 zwischen den Korbaufhängungsholmen 2041, 2041' kann jeder einzelne Siebkorb 2030 durch Verschwenken der ersten Siebkorbhalbschale 2031 und Verschwenken der zweiten Siebkorbhalbschale 2032 einfach geöffnet werden, wodurch die jeweiligen Siebeinsätze 2033 zugänglich gemacht werden.

Es folgt eine Entnahme der bestehenden verschlissenen Siebkorbeinsätze 2033 und Einlage neuer Siebkorbeinsätze 2033.

Nach anschliessendem Verschwenken und Verschrauben der Siebkorbhalbschalen 2031, 2032 ist die Schneckenpresse 2 für zukünftige Pressdurchgänge vorbereitet und kann nach Verschluss der Pressenkammer 20 mittels Abdeckhaube 22 direkt wieder in Betrieb genommen werden.

Gemäss erfindungsgemässem Wartungsverfahren verbleiben die Siebkorbhalbschalen 2031, 2032 im Pressenraum 20 und nur die Siebkorbeinsätze 2033 sind auszuwechseln. Auf eine Demontage und Montage der Schneckenwelle 202 kann verzichtet werden.

### Bezugszeichenliste:

2 Schneckenpresse
   20 Pressenkammer
      201 Filtratraum (zwischen Siebmantel und Abdeckhaube bzw. Abflusswanne)
      202 Schneckenwelle
         2021 Schneckenwellenwendel
      203 Siebmantel (abgeschlossenes Gehäuse, Schutz vor Verletzung)
         2030 Siebkorb (mehrteilig, bildet mit Einsatz zwei Hohlzylinder gegeneinander schwenkbar)
         2031 erste Siebkorbhalbschale
         2032 zweite Siebkorbhalbschale
         2033 Siebkorbeinsatz
         2034 Siebmantelinnenraum
         1 Korblänge
      204 Siebmantelhaltevorrichtung
         2040 zentrischer Holm
         2041 Korbaufhängungsholm
         2042 Lasche
         2043 Schwenkscharnier
         2044 Korbschliessmittel
      205 Vorentwässerungssieb
   21 Abflusswanne
   22 Abdeckhaube (mehrteilig, abnehmbar)
   23 Pressenstützvorrichtung
   24 Pressguteingabe
   25 Presskopf
      250 Pressgutausgabe
   26 Filtratauslass
   27 Motor
   28 Aufsteckgetriebe
   29 Hydraulikaggregat (integriert)
10 Pressenstütze
L Schneckenwellenachse
S Korblasche
H Horizontale

## Patentansprüche

1. Schneckenpresse (2), einsetzbar als Entwässerungsvorrichtung zum Verdichten und Entwässern einer Suspension, umfassend
eine Pressenkammer (20), in welcher eine Schneckenwelle (202) von einem Siebmantel (203) umgeben um eine Schneckenwellenachse (L) rotierbar gelagert ist, wobei der Siebmantel (203) an einer Siebmantelhaltevorrichtung (204) innerhalb der Pressenkammer (20) gehalten befestigt ist, die Siebmantelhaltevorrichtung (204) mindestens einen durch die Pressenkammer (20) verlaufenden, parallel zur Schneckenwellenachse (L) angeordneten Holm (2040) umfasst und der Siebmantel (203) aus einer Mehrzahl von mehrteiligen Siebkörben (2030) mit darin einlegbaren Siebkorbeinsätzen (2033) gebildet ist, jeder Siebkorb (2030) umfassend eine erste Siebkorbhalbschale (2031) und eine zweite Siebkorbhalbschale (2032),
wobei jeweils zwischen der ersten Siebkorbhalbschale (2031) und der zweiten Siebkorbhalbschale (2032) mindestens ein Schwenkscharnier (2043) angeordnet ist, das am Holm (2040) angeordnet und jeweils fest mit beiden Siebkorbhalbschalen (2031, 2032) verbunden ist, und die erste Siebkorbhalbschale (2031) und die zweite Siebkorbhalbschale (2032) somit relativ zueinander schwenkbewegbar gelagert sind, sodass im aufgeschwenkten Zustand ein ungehinderter Zugriff auf die Siebkorbeinsätze (2033) ermöglicht wird, wobei an den Siebkorbhalbschalen (2031, 2032) auf der dem Schwenkscharnier (2043) abgewandten Seite jeweils eine Korblasche (S) angeordnet ist,
**dadurch gekennzeichnet, dass** die Siebmantelhaltevorrichtung (204) den Holm (2040) und zwei parallel zur Schneckenwellenachse L verlaufend angeordnete Korbaufhängungsholmen (2041) sowie zwischen den beiden Korbaufhängungsholmen (2041) quer zur Schneckenwelle (202) orientiert angeordnete Laschen (2042) umfasst,
wobei die Korblaschen (S) im geschlossenen Zustand der beiden Siebkorbhalbschalen (2031, 2032) mittels Korbschliessmitteln (2044) an den Laschen (2042) der Siebmantelhaltevorrichtung (204) lösbar befestigt sind.

2. Schneckenpresse (2) nach Anspruch 1, wobei die Siebkorbhalbschalen (2031, 2032) mit Flanschen (F) versehen sind, welche entlang einer Korblänge (1) der halbzylindrischen Siebkorbhalbschalen (2031, 2032) verlaufen, und die Siebkorbhalbschalen (2031, 2032) mittels dieser Flansche (F) mit dem mindestens einen Schwenkscharnier (2043) verbunden sind.

3. Schneckenpresse (2) nach einem der Ansprüche 1 bis 2, wobei zwei Schwenkscharniere (2043) pro Siebkorb (2030) vorgesehen sind.

4. Schneckenpresse (2) nach einem der vorhergehenden Ansprüche, wobei die Korblasche (S) ein Durchgangsloch aufweist, durch welches ein Korbschliessmittel (2044) die Korblasche (S) und die Lasche (2042) der Siebmantelhaltevorrichtung (204) querend durchführbar ist, sodass der Siebkorb (2030) entlang einer Korblänge (1) der halbzylindrischen Siebkorbhalbschalen (2031, 2032) vollständig geschlossen ist.

5. Schneckenpresse (2) nach Anspruch 4, wobei eine Schraube als Korbschliessmittel (2044) die Korblasche (S) und die Lasche (2042) der Siebmantelhaltevorrichtung (204) querend durchführbar ist und mit einer Mutter gekontert ist.

6. Schneckenpresse (2) nach einem der vorhergehenden Ansprüche, wobei die Siebmantelhaltevorrichtung (204) mindestens einen beabstandet vom Holm (2040) parallel zur Schneckenwellenachse (L) verlaufenden Korbaufhängungsholm (2041) aufweist, an welchem die Verschliessung der ersten Siebkorbhalbschale (2031) und der zweiten Siebkorbhalbschale (2032) entlang der Korblänge (1) zur Bildung des geschlossenen Siebkorbes (2030) stattfindet.

7. Biogasanlage mit einer Schneckenpresse (2) gemäss einem der vorhergehenden Ansprüche.

8. Wartungsverfahren zum Wechsel von Siebkorbeinsätzen (2033) aus Siebkörben (2030) in einer Pressenkammer (20) einer Schneckenpresse (2) nach einem der Ansprüche 1 bis 6, welche als Teil einer Entwässerungsvorrichtung zum Entwässerung von Suspensionen verwendet wird, **gekennzeichnet durch**
a) Öffnung der Pressenkammer (20) durch mindestens teilweise Entfernung einer Abdeckhaube (22),
b) Lösung von Korbschliessmitteln (2044) zwischen einer quer zu einer Schneckenwelle (202) orientiert angeordneten Lasche (2042) einer Siebmantelhaltevorrichtung (204) und einer Korblasche (S) an einer ersten Siebkorbhalbschale (2031),
c) Verschwenken der ersten Siebkorbhalbschale (2031) mittels mindestens einem mit der ersten Siebkorbhalbschale (2031) verbundenen Schwenkscharnier (2043), wobei die Siebkorbhalbschale (2031) in der Pressenkammer (20) verbleibt,
d) Entnahme des vorhandenen Siebkorbeinsatzes (2033) und Einlage eines neuen Siebkorbeinsatzes (2033),
e) Wiederholung der Schritte b) bis d), solange bis alle verschlissene Siebkorbeinsätze (2033) ausgewechselt wurden, bevor
f) verschwenkte Siebkörbe (2030) wieder mittels Korbschliessmitteln (2044) verschlossen werden und
g) die Abdeckhaube (22) wieder geschlossen wird.

## Claims

1. A screw press (2), usable as a dewatering device, for compressing and dewatering a suspension, comprising
a press chamber (20), in which a screw shaft (202) is mounted in such a way that it is surrounded by a screen jacket (203) and is rotatable about a screw shaft axis (L), wherein the screen jacket (203) is fastened, held within the press chamber (20), to a screen jacket holding device (204), the screen jacket holding device (204) comprises at least one beam (2040) running through the press chamber (20) and arranged parallel to the screw shaft axis (L), and the screen jacket (203) is formed of a plurality of multipart screen baskets (2030) with screen basket inserts (2033) insertable therein, each screen basket (2030) comprising a first screen basket half shell (2031) and a second screen basket half shell (2032), wherein between the first screen basket half shell (2031) and the second screen basket half shell (2032) is respectively arranged at least one pivot hinge (2043), which is disposed on the beam (2040) and is respectively fixedly connected to both screen basket half shells (2031, 2032), and the first screen basket half shell (2031) and the second screen basket half shell (2032) are thus mounted such that they are pivotably movable relative to each other, so that, in the swung-open state, unimpeded access to the screen basket inserts (2033) is enabled, wherein
on the screen basket half shells (2031, 2032), on the side facing away from the pivot hinge (2043), is respectively arranged a basket lug (S), **characterized in that**,
wherein the screen jacket holding device (204) comprises the beam (2040) and two basket suspension beams (2041), which are arranged running parallel to the screw shaft axis (L), and, between the two basket suspension beams (2041) the brackets (2042) are arranged oriented transversely to the screw shaft (202),
wherein the basket lug (S) are releasably fastened to the screen jacket holding device (204) by means of basket closing means (2044) in the closed state of the two screen basket half shells (2031, 2032).

2. The screw press (2) as claimed in claim 1, wherein the screen basket half shells (2031, 2032) are provided with flanges (F), which run along a basket length (1) of the semicylindrical screen basket half shells (2031, 2032), and the screen basket half shells (2031, 2032) are connected to the at least one pivot hinge (2043) by means of these flanges (F).

3. The screw press (2) as claimed in one of claims 1 to 2, wherein two pivot hinges (2043) per screen basket (2030) are provided.

4. The screw press (2) as claimed in any of the preceeding claims, wherein the basket lug (S) has a through hole, through which a basket closing means (2044) can be guided, traversing the basket lug (S) and the bracket (2042) of the screen bracket holding device (204), so that the screen basket (2030), along a basket length (1) of the semicylindrical basket half shells (2031, 2032), is fully closed.

5. The screw press (2) as claimed in claim 4, wherein a bolt, traversing the basket lug (S) and the bracket (2042) of the screen jacket holding device (204), is feasible as the basket closing means (2044), and is locked with a nut.

6. The screw press (2) as claimed in one of the preceding claims, wherein the screen jacket holding device (204) has at least one basket suspension beam (2041), which runs at a distance from the beam (2040) parallel to the screw shaft axis (L) and on which the closure of the first screen basket half shell (2031) and of the second screen basket half shell (2032) along the basket length (1), for the formation of the closed screen basket (2030), takes place.

7. A biogas plant comprising a screw press (2) according to one of the preceding claims.

8. A maintenance process for changing screen basket inserts (2033) from screen baskets (2030) in a press chamber (20) of a screw press (2) as claimed in one of claims 1 to 8, which screw press is used as part of a dewatering device for dewatering suspensions,
**characterized by**
a) opening of the press chamber (20) by at least partial removal of a cover hood (22),
b) release of basket closing means (2044) between a bracket (2042) of a screen jacket holding device (204) arranged transversely to a screw shaft (202) and a basket lug (S) on a first screen basket half shell (2031),
c) pivoting of the first screen basket half shell (2031) by means of at lest one pivot hinge (2043) connected to the first screen basket half shell (2031), wherein the screen basket half shell (2031) remains in the press chamber (20),
d) removal of the screen basket insert (2033) which is present and insertion of a new screen basket insert (2033),
e) repetition of steps b) to d) until such time as all worn screen basket inserts (2033) have been exchanged, before
f) pivoted screen baskets (2030) are reclosed by means of basket closing means (2044), and
g) the cover hood (22) is reclosed.

## Revendications

1. Presse à vis sans fin (2), utilisable comme dispositif de déshydratation pour comprimer et déshydrater une suspension, comprenant
une chambre de pressage (20) dans laquelle un arbre de vis sans fin (202) est monté rotatif autour d'un axe d'arbre de vis dans fin (L), entouré par un manchon perforé (203), dans laquelle le manchon perforé (203) est fixé à un dispositif de maintien de manchon perforé (204) en étant maintenu à l'intérieur de la chambre de pressage (20), le dispositif de maintien de manchon perforé (204) comprend au moins un longeron (2040) s'étendant à travers la chambre de pressage (20) et étant disposé en parallèle à l'axe d'arbre de vis sans fin (L), et le manchon perforé (203) est formé d'une pluralité de crépines (2030) à plusieurs parties dotées d'inserts de crépine (2033) pouvant être insérés dans celles-ci, chaque crépine (2030) comprenant une première demi-coque de crépine (2031) et une deuxième demi-coque de crépine (2032),
dans laquelle au moins une charnière pivotante (2043) est disposée entre la première demi-coque de crépine (2031) et la deuxième demi-coque de crépine (2032) respectivement, qui est disposée au niveau du longeron (2040) et est reliée solidement aux deux demi-coques de crépine (2031, 2032) respectivement, et la première demi-coque de crépine (2031) et la deuxième demi-coque de crépine (2032) sont donc montées pivotantes l'une par rapport à l'autre de sorte qu'à l'état de pivotement ouvert, un accès libre aux inserts de crépine (2033) est rendu possible, respectivement une patte de crépine (S) étant disposée sur les demi-coques de crépine (2031, 2032) du côté détourné de la charnière pivotante (2043),
**caractérisée en ce que** le dispositif de maintien de manchon perforé (204) comprend le longeron (2040) et deux longerons de suspension de crépine (2041) disposés en s'étendant en parallèle à l'axe d'arbre de vis sans fin L, ainsi que des pattes (2042) disposées entre les deux longerons de suspension de crépine (2041) en étant orientées transversalement à l'arbre de vis sans fin (202),
dans laquelle, à l'état fermé des deux demi-coques de crépine (2031, 2032), les pattes de crépine (S) sont fixées de manière amovible aux pattes (2042) du dispositif de maintien de manchon perforé (204) à l'aide de moyens de fermeture de crépine (2044).

2. Presse à vis sans fin (2) selon la revendication 1, dans laquelle les demi-coques de crépine (2031, 2032) sont dotées de brides (F) qui s'étendent le long d'une longueur de crépine (1) des demi-coques de crépine (2031, 2032) semi-cylindriques, et les demi-coques de crépine (2031, 2032) sont reliées à ladite au moins une charnière pivotante (2043) à l'aide de ces brides (F).

3. Presse à vis sans fin (2) selon l'une quelconque des revendications précédentes 1 à 2, dans laquelle deux charnières pivotantes (2043) sont prévues par crépine (2030).

4. Presse à vis sans fin (2) selon l'une quelconque des revendications précédentes, dans laquelle la patte de crépine (S) présente un trou traversant à travers lequel un moyen de fermeture de crépine (2044), la patte de crépine (S) et la patte (2042) du dispositif de maintien de manchon perforé (204) peuvent être guidés en se croisant de sorte que la crépine (2030) est complètement fermée le long d'une longueur de crépine (1) des demi-coques de crépine (2031, 2032) semi-cylindriques.

5. Presse à vis sans fin (2) selon la revendication 4, dans laquelle une vis comme moyen de fermeture de crépine (2044) peut être guidée en croisant la patte de crépine (S) et la patte (2042) du dispositif de maintien de manchon perforé (204) et peut être bloquée par un contre-écrou.

6. Presse à vis sans fin (2) selon l'une quelconque des revendications précédentes, dans laquelle le dispositif de maintien de manchon perforé (204) présente au moins un longeron de suspension de crépine (2041) s'étendant à distance du longeron (2040) en parallèle à l'axe d'arbre de vis sans fin (L), au niveau duquel la fermeture de la première demi-coque de crépine (2031) et de la deuxième demi-coque de crépine (2032) a lieu le long de la longueur de crépine (1) pour former la crépine fermée (2030).

7. Installation de biogaz, comprenant une presse à vis sans fin (2) selon l'une quelconque des revendications précédentes.

8. Procédé de maintenance pour le remplacement d'inserts de crépine (2033) provenant de crépines (2030) dans une chambre de pressage (20) d'une presse à vis sans fin (2) selon l'une quelconque des revendications 1 à 6 qui est utilisée comme une partie d'un dispositif de déshydratation pour déshydrater des suspensions, **caractérisé par** les étapes consistant à
a) ouvrir la chambre de pressage (20) par le retrait au moins partiel d'un capot de protection (22),
b) desserrer des moyens de fermeture de crépine (2044) entre une patte (2042), disposée en étant orientée transversalement à un arbre de vis sans fin (202), d'un dispositif de maintien de manchon perforé (204) et une patte de crépine (S) sur une première demi-coque de crépine (2031),
c) faire pivoter la première demi-coque de crépine (2031) à l'aide d'au moins une charnière pivotante (2043) reliée à la première crépine, la demi-coque de crépine (2031) restant dans la chambre de pressage (20) ,
d) retirer l'insert de crépine (2033) existant et insérer un nouvel insert de crépine (2033),
e) répéter les étapes b) à d) jusqu'à ce que tous les inserts de crépine usés (2033) aient été remplacés, avant de
f) refermer les crépines ayant pivoté (2030) à l'aide de moyens de fermeture de crépine (2044), et
g) refermer le capot de protection (22).
